Europäisches Patentamt

(19) European Patent Office

Office européen des brevets

(11) Publication number: **0 110 677**
A1

(12) # EUROPEAN PATENT APPLICATION

(21) Application number: **83307168.1**

(22) Date of filing: **24.11.83**

(51) Int. Cl.³: **H 01 B 3/44**, C 08 L 23/16

(30) Priority: **26.11.82 US 444854**

(43) Date of publication of application: **13.06.84**
**Bulletin 84/24**

(84) Designated Contracting States: **DE FR GB IT NL**

(71) Applicant: **Exxon Research and Engineering Company, P.O.Box 390 180 Park Avenue, Florham Park New Jersey 07932 (US)**

(72) Inventor: **Spenadel, Lawrence, 500 Montauk Drive, Westfield New Jersey (US)**

(74) Representative: **Dew, Melvyn John et al, Esso Chemical Ltd. Esso Chemical Research Centre P.O. Box 1, Abingdon Oxfordshire, OX13 6BB (GB)**

(54) **Non-crosslinked elastomeric thermoplastic compositions for low voltage insulation.**

(57) Compositions comprising a non-crosslinked ethylene propylene elastomer; a hydrocarbon oil; and an inorganic filler, are very effective for low voltage insulation applications.

EP 0 110 677 A1

NON-CROSSLINKED ELASTOMERIC THERMOPLASTIC COMPOSITIONS
FOR LOW VOLTAGE INSULATION

This invention relates to non-crosslinked elastomeric thermoplastic compositions for low voltage insulation, comprising an ethylene propylene elastomer; a hydrocarbon oil; and an inorganic filler.

Blends of various elastomer oils and crystalline polyolefins have been developed to obtain desired properties. Typical patents are 4,132,698, 4,247,652, 4,247,661, 4,088,713 and 4,046,840. These require the presence of substantial amounts of crystalline polyolefin in the blends to achieve the properties sought.

It has now been found that compositions comprising non-crosslinked ethylene propylene elastomers; a hydrocarbon oil; and an inorganic filler, are possessed of high green strength, adequate tensile strength and easy processability. It is surprising that the compositions provide these properties without vulcanizing or crosslinking the elastomer or incorporating substantial amounts of crystalline polyolefins.

The elastomer is a non-crosslinked ethylene propylene elastomer having a Mooney viscosity, ML (1 + 8) @ 127° in the range of about 175 to 250 and an ethylene content in the range of about 60 to 75 wt. percent, with the balance predominantly propylene. The term ethylene propylene elastomer is intended to generically connote ethylene propylene copolymers (EPM) and ethylene propylene terpolymers (EPDM). Typical of the third monomers is a $C_5-C_{14}$ nonconjugated diolefin. Non-limiting examples of such nonconjugated diolefins include the following:

A.    Straight chain acyclic dienes such as:  1,4-hexadiene and 1,6-octadiene.

B.    Branched acyclic dienes such as 5-methyl 1,4-hexadienes, 3,7-dimethyl 1,6-octadiene, 3,7-dimethyl 1,7 octadiene and mixed isomers of dihydromyrcene, and dihydroocimene.

C. Single ring alicyclic dienes such as 1,4-cyclohexadiene, 1,5-cyclooctadiene and 1,5-cyclododecadiene.

D. Multiring alicyclic fused and bridged ring diene such as: tetrahydroindene, methyl tetrahydroindene, dicyclopentadiene, bicyclo (2,2,1) hepta 2,5-diene, alkenyl, alkylidene, cycloalkenyl and cycloalkylidene norbornenes such as 5-methylene-2-norbornene (MNR), 5-ethylidene-2-norbornene (ENB), 5-propenyl-2-norbornene, 5-isopropylidene-2-norbornene, 5-(4-cyclopentenyl)-2-norbornene, and 5-cyclohexylidene-2-norbornene.

Preferred is 5-ethylidene-2-norbornene (ENB).

The ethylene/higher alpha olefin copolymers and terpolymers may be prepared by any conventional manner and the preparation of same does not constitute part of the instant invention.

The hydrocarbon oil utilized is a rubber process oil which is either napthenic or paraffinic in nature. The oil is utilized in an amount of about 50 to 150 parts by weight per hundred parts of elastomer (phr).

The inorganic filler is an inert material and is utilized in an amount of about 200 to 400 parts by weight per 100 parts of elastomer. Illustrative of such inorganic inert materials are ground and precipitated calcium carbonate; standard, delaminated, calcined, and hydrated Kaolin clays; precipitated, hydrated silicas; and silicates, especially calcium and magnesium silicates.

Low density polyethylene can be incorporated into the compound in the amount of 15-150 phr. The addition of polyethylene which serves as a processing aid is suggested when it is desirable to pelletize the compound prior to extruding the compound onto wire. Also, the addition of polyethylene will increase abrasion resistance while reducing the flexibility of the compound.

For improved heat resistance and weatherability, the addition of 1 phr hindered phenols such as Irganox 1010 and 0.2 phr of UV light stabilizers (Tinuvin P, Tinuvin 622) may be required.

Blending of the compounding ingredients should be carried out in an intensive, internal mixer such as a Banbury. An upside-down mix procedure in which all ingredients are added at time zero with the EP rubber added last has been found to give excellent results. The mixing time is about 5 minutes and the temperature of the compound at time of discharge should be 125-140°C.

The compositions of this invention can be employed in a wide variety of low voltage insulation applications, e.g., battery booster cables, flexible cord, appliance wire and welding cable.

The compositions of this invention can be processed in a broader variety of equipment than most available thermoplastic elastomers. They can be extruded under conditions similar to vulcanizable EPDM in a rubber extruder with a 8-15/1 L/D and standard rubber screw (single flight, straight 1.5/1 compression) with profiles of 95°-95°-95°-100°C on the barrel and head and the die at 100-120°C. The compositions can also be run on a thermoplastic extruder of 15-24/1 L/D using a polyethylene type screw. Similar temperature profiles can be used. However, successful extrusions and rapid extrusion rates have also been obtained at substantially higher temperatures with profiles of 140°-140°-140°-150°C on the barrel and head and the die at 150°-170°C.

This invention and its advantages will be better understood from the following examples.

### EXAMPLE 1

This example illustrates that the non-crosslinked elastomeric thermoplastic compositions of this invention give surprisingly good and unexpected balance of physical properties that are about equivalent to a peroxide-cured thermosetting compound of the same composition. All parts are by weight.

|  | Non-Crosslinked | Crosslinked |
|---|---|---|
| *EPDM (contains 75 phr oil) | 175 | 175 |
| Calcined Clay | 350 | 350 |
| Paraffin Wax | 5 | 5 |
| Paraffinic Oil | 35 | 35 |
| Irganox 1010 | 1 | 1 |
| Dilauryl Thiodiproprionate | 0.5 | 0.5 |
| Tetraethylene Glycol Dimethacrylate | - | 2 |
| 40% Dispersion of Dicumyl Peroxide | - | 12 |
| PHYSICAL PROPERTIES - Extruded on Wire | | |
| Cured | No Cure | 1 min/200°C |
| Shore A Hardness | 60 | 60 |
| 200% Modulus, psi | 600 | 620 |
| Tensile Strength, psi | 950 | 1020 |
| Elongation, % | 450 | 400 |
| Heat Aged Physical Properties (Air Oven Aged 7 days/121°C) | | |
| % Tensile Retained | 76 | 82 |
| % Elongation Retained | 62 | 68 |
| Electrical Properties | | |
| Breakdown Voltage | 18kV | 21kV |

*Vistalon 3777, typically 65 wt. percent ethylene, 30 wt. percent propylene, 5 wt ENB, narrow mol wt. dist. having a typical Mooney value of 45 at ML (1 + 8) at 127°C and typically contains 43 wt percent oil.

## EXAMPLE 2

This example illustrates the effect of adding polyethylene to the composition for the purpose of making it pelletizable. In this case, calcium carbonate was used as the major filler ingredient. All parts are by weight.

|  | Non-Crosslinked | Crosslinked |
|---|---|---|
| *EPDM (contains 75 phr oil) | 175 | 175 |
| Calcium Carbonate | 350 | 350 |
| Low Density Polyethylene (2.1 MI) | 117 | 117 |
| Paraffin Wax | 6 | 6 |
| Paraffinic Oil | 35 | 35 |
| Irganox 1010 | 1.2 | 1.2 |
| Dilauryl Thiodiproprionate | 0.6 | 0.6 |
| Trimethylol Propane Tri-methacrylate | - | 2 |
| 40% Dispersion of Dicumyl Peroxide | - | 12 |
| PHYSICAL PROPERTIES - Compression Molded | | |
| Cured | No Cure | 10'/177°C |
| Shore A Hardness | 75 | 78 |
| 200% Modulus, psi | 650 | 680 |
| Tensile Strength, psi | 800 | 870 |
| Elongation, % | 300 | 300 |
| Heat Aged Physical Properties (Air Oven Aged 7 days/121°C) | | |
| % Tensile Retained | 125 | 115 |
| % Elongation Retained | 50 | 62 |
| Ozone Resistance | | |
| IPCEA Ozone test, 0.3 vol.% ozone, 100 hours | No Cracks | No Cracks |
| Low Temperature Performance | | |
| -40°C Bend Test | No Cracks | No Cracks |
| Electrical Properties | | |
| Dielectric Constant | 3.47 | 3.42 |
| Power Factor, % | 2.12 | 2.04 |
| Dielectric Strength, v/mil | 780 | 800 |

* EPDM same as Example 1.

The advantages of this invention will be apparent to the skilled in the art. Compositions are provided that can be processed in a broader variety of equipment than previously available thermoplastic elastomers.

Substantial energy savings are made available to cable producers because the compositions can be extruded at substantially lower temperature than previously commercially available formulations. The products have excellent low temperature properties and are quite flexible at temperatures well below zero. All of these advantages are provided in inexpensive compositions without the need to vulcanize the elastomer or blend with substantial amounts of crystalline polyolefins which are a deterrent to the desired processability.

It will be understood that this invention is not limited to the specific examples which are offered as particular embodiments, and that modifications can be made without departing from the spirit thereof.

CLAIMS:

1.    A non-crosslinked elastomeric thermoplastic composition for low voltage insulation applications comprising:

(A)   A non-crosslinked ethylene propylene elastomer
having a Mooney viscosity ML (1 + 8) at 127°C in the range
of about 175 to 250, and an ethylene content in the range
of about 60 to 75 wt. percent,

(B)   A hydrocarbon oil selected from the group consisting of naphthenics and paraffinic oils in an amount
in the range of about 50 to 150 parts by weight per 100
parts of elastomer, and

(C)   An inorganic filler in a range of about 200 to
400 parts by weight per 100 parts of elastomer.

2.    The composition of claim 1 in which the
elastomer is an ethylene propylene copolymer.

3.    The composition of claim 1 in which the
elastomer is a terpolymer.

4.    The composition of claim 3 in which the
terpolymer has an ethylene content of 65 wt. percent, a
propylene content of 30 wt. percent, and an ENB content
of 5 wt. percent.

5. The composition of claims 1. 2. 3 or
4 which additionally includes low density polyethylene
in an amount of from 15-150 parts by weight per 100
parts of elastomer.

6. The use of a composition according to any
one of the preceding claims as a low voltage insulation
material.

7. An electrical cable. wire or flex inclu-
ding a composition according to any one of claims 1 to
5 as material for insulating the electrically conductive
components.

## European Patent Office

**EUROPEAN SEARCH REPORT**

Application number

EP 83 30 7168

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP-A-0 052 469 (UNIROYAL) | | H 01 B 3/44 <br> C 08 L 23/16 |
| | --- | | |
| A | US-A-2 867 848 (R.M. McGLAMERY) | | |
| | ----- | | |

**TECHNICAL FIELDS SEARCHED (Int. Cl. ³)**

H 01 B 3/00
C 08 L 23/00

The present search report has been drawn up for all claims

| Place of search | Date of completion of the search | Examiner |
|---|---|---|
| THE HAGUE | 08-03-1984 | STIENON P.M.E. |